# EUROPÄISCHE PATENTSCHRIFT

(11) **EP 1 078 807 B1**
(45) Veröffentlichungstag und Bekanntmachung des Hinweises auf die Patenterteilung: **26.10.2005**
(21) Anmeldenummer: 00115281.8
(22) Anmeldetag: 14.07.2000
(51) Int. Cl.: B60N 2/02, B60R 16/02

(54) **Elektrische Verstelleinrichtung für einen Vordersitz eines Kraftfahrzeugs**
Electrical drive device for a front seat of a motor vehicle
Dispositif de réglage éléctrique pour le siège d'un véhicule automobile

(30) Priorität: 20.08.1999 DE 19939183
(43) Veröffentlichungstag der Anmeldung: 28.02.2001
(73) Patentinhaber: DaimlerChrysler AG, 70567 Stuttgart (DE)
(72) Erfinder: Langer, Jochen, 72070 Tübingen (DE); Maly, Peter, 72184 Eutingen im Gäu (DE); Rauscher, Frank, 72104 Pliezhausen (DE)

(56) Entgegenhaltungen:
- US-A- 3 597 554
- US-A- 4 547 718
- US-A- 5 562 325

## Beschreibung

Die Erfindung betrifft eine elektrische Verstelleinrichtung für einen Vordersitz eines Kraftfahrzeugs mit den Merkmalen des Oberbegriffs des Anspruchs 1.

Aus der DE 196 30 223 A1 ist eine gattungsgemäße Verstelleinrichtung, bei welcher der Vordersitz mittels elektrischer Stellmotoren verstellbar ist, bekannt.

Bei der genannten Verstelleinrichtungen ist eine Hilfseinrichtung zur bedarfsweisen Vorverlegung des Vordersitzes in eine Einstiegsstellung und Rückverlegung in eine Rückverlegungsstellung vorgesehen. Mit einer solchen Hilfseinrichtung soll der Einstieg und Zugang zu den Fondsitzen bei zweitürigen Fahrzeugen erleichtert werden (Easy-Entry-Funktion, Einstiegshilfe). Die bekannte Hilfseinrichtung bezieht sich auf Vordersitze, die aus einem in Längsrichtung elektromotorisch verstellbaren Sitzunzerteil mit einer schwenkbaren Sitzrückenlehne aufgebaut sind. Dazu ist an der Sitzlehne ein Entriegelungshebel vorgesehen, durch den in Entriegelungsstellung die Sitzlehne mechanisch entriegelt und ihr Vorklappen ermöglicht wird. Beim Vorwärtsschwenken der Sitzrückenlehne merkt sich ein elektrisches Speichermittel die aktuelle Gebrauchsstellung. Danach fährt die Hilfseinrichung den Vordersitz nach vorn in die Einstiegsstellung, so daß ein einfacher Zugang zu den Fondsitzen möglich ist. Beim Zurückschwenken der Sitzrückenlehne fährt der Vordersitz in eine Rückverlegungsstellung, welche z.B. der gespeicherten Ausgangsstellung entspricht.

Für den Fall, daß der Vordersitz auf eine verhältnismäßig weit hinten liegende Position eingestellt war, besteht die Gefahr, daß ein Fondinsasse bei der Rückverlegung des Vordersitzes in die gespeicherte Ausgangsstellung eingeklemmt wird. Um dieses zu verhindern, ist in gattungsbildenden Schrift eine Sperrfunktion vorgesehen, welche die Rückverlegung des Vordersitzes auf eine maximale Rückverlegungsstellung begrenzt.

Im täglichen Gebrauch jedoch werden die Fondsitze sehr oft lediglich zur Ablage von Gegenständen, z.B. einer Aktentasche verwendet. In diesen Fällen ist die Begrenzung der Rückverlegung nicht erforderlich und für eine großgewachsene Person, die auf dem Vordersitz Platz nimmt, sogar unerwünscht, da jedesmal durch einen manuellen Eingriff die Begrenzung überspielt werden muß.

In der gattungsbildenden Schrift ist daher vorgesehen, daß eine Begrenzung der Rückverlegung des Vordersitzes und die damit verbundenen Komforteinbuße für einen großgewachsenen vorderen Insassen nur dann stattfindet, wenn auch tatsächlich der Fondsitz von einem Insassen belegt wird. Dies wird mittels einer elektronische Sitzbelegungserkennung im hinter dem Vordersitz angeordneten Fondsitz abgefragt.

Nachteilig an dieser Lösung ist der verhältnismäßig große Aufwand. Des weiteren wäre es wünschenswert, wenn ein Bediener das Maß der Vorverlegung und Rückverlegung des Vordersitzes individuell steuern könnte, ohne deshalb die normalerweise nur von den Vordersitzen aus bequem zu bedienende Bedieneinheit für die Sitzverstellung zu verwenden.

Aufgabe der Erfindung ist es, eine gattungsgemäße elektrische Verstelleinrichtung für einen Vordersitz eines Kraftfahrzeugs dahingehend zu verbessern, daß die Verlegung des Vordersitzes in Längsrichtung für einen einsteigenden Bediener individuell steuerbar ist.

Diese Aufgabe wird durch die Merkmale des Anspruchs 1 gelöst, wobei die Merkmale der Unteransprüche vorteilhafte Aus- und Weiterbildungen kennzeichnen.

Erfindungsgemäß wird der Vordersitz nur dann elektromotorisch vorverlegt, wenn nach Entriegelung der Sitzlehne, die Sitzlehne vorgeklappt ist und gleichzeitig noch der Entriegelungshebel in Entriegelungsstellung betätigt wird. Ist die gewünschte Position erreicht, kann durch Rückführung des Entriegelungshebels in die Neutralstellung die Vorverlegung angehalten werden. Damit ist es möglich, den Sitz nur soweit vorzufahren wie unbedingt nötig, z.B. um einen Aktenkoffer in den Fußraum vor dem Fondsitz abzustellen.

Wenn allein die Sitzlehne umgeklappt werden soll, um einen Aktenkoffer auf dem Fondsitz abzustellen, kann durch entsprechende Handhabung eine Vorverlegung des Vordersitzes unterdrückt werden. Dazu muß unmittelbar nach Entriegelung der Sitzlehne der Entriegelungshebel in die Neutralstellung zurückgeführt werden, bevor der Sitzlehnenschalter durch das Vorklappen der Sitzlehne betätigt wird. Dazu ist es vorteilhaft, wenn gemäß Anspruch 2, der Sitzlehnenschalter so angeordnet ist, daß er möglichst spät - wenn die Sitzlehne in die Endlage vorgeklappt ist - betätigt wird.

In der Ausbildung gemäß Anspruch 3 kann durch Herunterdrücken des Entriegelungshebels über die Neutralstellung hinaus eine Rückverlegung des Vordersitzes angefordert werden, wobei je nach Ausführung die Rückverlegung unabhängig von dem Winkel der Sitzlehne oder nur bei in die Gebrauchsstellung zurückgeklappter Sitzlehnen möglich ist.

Weitere Einzelheiten und vorteilhafte Weiterbildungen der erfindungsgemäßen Verstelleinrichtung ergeben sich aus den weiteren Unteransprüchen in Verbindung mit der folgenden Beschreibung.

Ein Ausführungsbeispiel der Erfindung ist in der Zeichnung anhand dargestellt und wird nachstehend erläutert. Es zeigen:
Fig. 1 eine erfindungsgemäße elektrische Verstelleinrichtung
Fig. 2 den Entriegelungshebel mit drei Betätigungsstellungen.

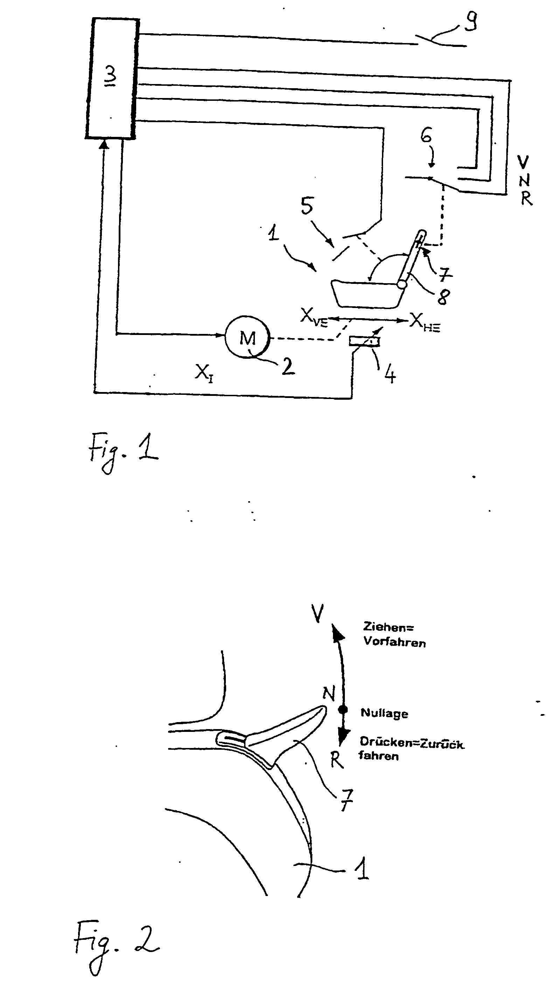

In dem in Fig. 1 dargestellten Ausführungsbeispiel ist ein Vordersitz 1 durch eine elektrische Verstelleinrichtung 2-4, in Längsrichtung zwischen einer vorderen X_{VE} und einer hinteren Endstellung X_{HE} mittels eines Stellmotors 2 verschiebbar. Die Verstelleinrichtung 2-4 umfaßt ein Steuergerät 3, welches den Stellmotor 2 aktiviert, wenn der Vordersitz 1 nach vorne oder hinten verschoben werden soll. Der Istwert X_{I} der Längsstellung des Vordersitzes 1 wird durch einen Weggeber 4, beispielsweise ein Potentiometer erfaßt und dem Steuergerät 3 zugeführt. Mit dem so gebildete Regelkreis kann eine vorgegebene Sollstellung genau angefahren werden.

Die anzufahrende Sollstellung wird in Abhängigkeit verschiedener Anforderungsbedingungen vorgegeben. Insbesondere kann das Steuergerät 3 in eine Einstiegshilfe-Betriebsweise versetzt werden, bei der der Vordersitz 1 in eine Einstiegsstellung nach vorne verschoben wird. Damit wird der Einstieg zu einem hinter dem Vordersitz angeordneten Fondsitz (nicht dargestellt) erleichtert.

Zur Anforderung der Vorverlegung ist ein das Steuergerät 3 ansteuernder Sitzlehnenschalter 5 vorgesehen, welcher durch Vorklappen der Sitzlehne 8 des Vordersitzes 1 betätigbar ist. Vorzugsweise wird der Sitzlehnenschalter 5 so angeordnet, daß er erst dann betätigt wird, wenn die Sitzlehne 8 bis zur Endlage oder bis kurz davor vorgeklappt ist. Dies entspricht ungefähr einem Winkel oberhalb von 50°.

Das Steuergerät 3 wird erfindungsgemäß zusätzlich angesteuert von einem Umschalter 6 mit zumindest einer Vorverlegungsstellung V und einer Neutralstellung N. Der Umschalter 6 ist mit dem Entriegelungshebel 7 gekoppelt, welcher an der Sitzlehne 8 vorgesehen ist. Wird der Entriegelungshebel 7 in Entriegelungsstellung gebracht, dann wird die Sitzlehne 8 mechanisch entriegelt, was ihr Vorklappen ermöglicht. Gleichzeitig wird beim Übergang in die Entriegelungsstellung der Umschalter 6 in die Vorverlegungsstellung V gebracht.

Zur Anforderung der Vorverlegung und elektromotorischen Verschiebung des Vordersitzes 1 in die Einstiegsstellung muß erfindungsgemäß nicht nur der Sitzlehnenschalter 5 durch Vorklappen der Sitzlehne 8 betätigt sein, sondern auch der Umschalter 6 durch Betätigung des Entriegelungshebels 7 in die Vorverlegungsstellung V gebracht werden.

Das Vorfahren des Sitzes wird abgebrochen, wenn der Entriegelungshebel 7 und damit der Umschalter 6 in die Neutralstellung N gebracht werden. Es ist ergonomisch vorteilhaft, wenn für den Entriegelungshebel 7 und den Umschalter 6 ein selbsttätiger Rückgang in die Neutralstellung N vorgesehen ist. Dann kann durch Loslassen des Entriegelungshebels 7 die Vorverlegung des Vordersitzes 1 an einer gewünschten Stelle abgebrochen werden.

Alternativ kann eine rastenden Vorverlegungsstellung für den Umschalter 6 vorgesehen sein, womit durch Einrastung in die Vorverlegungsstellung die Vorverlegung in eine vorgegebene Einstiegsstellung angefordert werden kann, wie dies in der DE 196 30 223 A1 vorgesehen ist. Durch manuellen Eingriff, indem der Entriegelungshebel 7 manuell in die Neutralstellung zurückgebracht wird, kann ein Vorverlegungsvorgang abgebrochen werden.

Es kann weiterhin vorgesehen sein, daß eine Vorverlegung auch von anderen Bedingungen abhängen kann, beispielsweise von der Stellung eines Türkontaktschalters 9 auf der Einstiegsseite zu dem Sitz 1. Damit kann beispielsweise festgelegt werden, daß eine Vorverlegung des Vordersitzes 1 nur dann eingeleitet wird, wenn gleichzeitig die Tür auf der Einstiegsseite geöffnet ist.

Zur Rückverlegung des Vordersitzes 1 kann vorgesehen sein, daß im Anschluß an eine Vorverlegung allein durch Zurückschwenken der Sitzlehne 8 und in Neutralstellung des Entriegelungshebels 7 die Rückverlegung in eine Rückverlegungsstellung angefordert werden kann. Die Rückverlegungsstellung kann eine zuvor abgespeicherte Gebrauchsstellung sein oder in Abhängigkeit einer Sitzbelegung des zugeordneten Fondsitzes begrenzt sein, wie in der DE 196 30 223 A1 beschrieben.

In einer vorteilhaften Weiterbildung ist vorgesehen, daß unterhalb der Neutralstellung des Entriegelungshebels 7 und entsprechend des Umschalters 6 eine Rückverlegungsstellung R vorgesehen ist. Der Umschalter 6 kann somit durch Herunterdrücken des Entriegelungshebels 7 über die Neutralstellung hinaus in die Rückverlegungsstellung R gebracht werden. Dann steuert das Steuergerät 3 den Stellmotor 2 in der Weise an, daß der Vordersitz 1 nach hinten verschoben wird. Wenn der Entriegelungshebel 7 in Neutralstellung gebracht wird, wird der Rückverlegungsvorgang abgebrochen. Auch hier kann ein selbsttätiger Rückgang des Entriegelungshebels 7 vorgesehen sein oder eine rastende Rückverlegungsstellung, jeweils mit analoger Funktionalität wie bei der Vorverlegung und ggfs. Begrenzung wie in der DE 196 30 223 A1 beschrieben.

Eine Ausbildung, bei der allein die Betätigung des Entrieglungshebels 7 genügt, um die Rückverlegung anzufordern, hat den Vorteil, daß beim Zurückfahren des Vordersitzes 1 die Sitzlehne 8 vorgeklappt bleiben kann, was den Blick auf den Fußraum vor dem Fondsitz freigibt und damit eine bessere optische Kontrolle bietet.

Alternativ ist auch denkbar, daß zur Anforderung der Rückverlegung mittels des Entriegelungshebels 7 zusätzlich die Sitzlehne 8 wieder in die Gebrauchsstellung zurückgeschwenkt sein muß.

Es ist auch eine Kombination denkbar, bei der bei vorgeklappter Sitzlehne 8 die Rückverlegung mittels des Entriegelungshebels 7 individuell steuerbar ist und bei zurückgeschwenkter Sitzlehne 8 der Sitz 1 in eine vorgegebene Rückverlegungsposition zurückgefahren wird, die z.B. wie in der DE 196 30 223 A1 beschrieben vorgegeben werden kann.

Eine vorteilhafte Weiterbildung besteht darin, daß wenn eine Längsverstellung des Vordersitzes 1 durch die Betätigung des Entriegelungshebels 7 angefordert wird, der Verstellmotor 2 so angesteuert wird, daß diese Verstellung mit einer höheren Geschwindigkeit, z.B. dreimal so schnell, erfolgt, als die normale Komfortverstellung über die bekannte, vom Vordersitz 1 aus bequem zugängliche Bedieneinheit (nicht dargestellt). Dies ist möglich, weil in der Regel davon ausgegangen werden kann, daß bei einer vermittels des Entriegelungshebels 7 angeforderten Verstellung der Vordersitz 1 unbesetzt ist. Das geringere zu verschiebende Gewicht erlaubt es daher, die zur Verfügung stehende Leistung des Verstellmotors 2 zu nutzen, um den Sitz 1 schneller zu verschieben. Damit kann ein schnelles Vor- oder Zurückfahren des Sitzes, ausgelöst durch Ziehen beziehungsweise Drücken des Entriegelungshebels 7, bewirkt werden, wie es gewünscht wird, wenn lediglich der Zugang zu den Fondsitzen erleichtert werden soll.

Ein darauf aufbauende Weiterbildung besteht darin, daß die Verstellung mit erhöhter Geschwindigkeit nur dann erfolgt, wenn gleichzeitig der Türkontaktschalter 9 eine geöffnete Tür anzeigt. Damit ist sichergestellt, daß die Verstellung tatsächlich der Einstiegserleichterung dient und der Vordersitz 1 unbesetzt ist.

In Fig. 2 ist der vergrößerte Ausschnitt des Vordersitz 1 mit dem Betätigungshebel 7 dargestellt, wie er für die erfindungsgemäße Funktion zur Einstiegserleicherung (Easy-Entry-Funktion) verwendet wird. Den drei Stellungen des Entriegelungshebels 7 (Ziehen, Nullage, Drücken) entsprechen die Schalterstellungen V, N, R des Umschalters 6.

## Patentansprüche

1. Elektrische Verstelleinrichtung für einen Vordersitz (1) eines Kraftfahrzeugs, mit welcher der Vordersitz zumindest in Längsrichtung elektromotorisch verschiebbar ist,
- mit einem Steuergerät (3), welches von einem durch Vorklappen der Sitzlehne betätigbaren Sitzlehnenschalter (5) in eine Einstiegshilfe-Betriebsweise versetzbar ist, bei der der Vordersitz in eine Einstiegsstellung nach vorne verschoben wird,
- wobei an der Sitzlehne (8) ein Entriegelungshebel (7) vorgesehen ist, durch den in Entriegelungsstellung die Sitzlehne mechanisch entriegelt und ihr Vorklappen ermöglicht wird,
**dadurch gekennzeichnet, daß** das Steuergerät (3) zusätzlich angesteuert wird von einem Umschalter (6) mit zumindest einer Vorverlegungsstellung V und einer Neutralstellung N,
- wobei der Umschalter (6) mit dem Entriegelungshebel (7) gekoppelt und in der Weise betätigbar ist, daß in Entriegelungsstellung des Entriegelungshebels (7) der Umschalter (6) sich in der Vorverlegungsstellung V befindet,
- wobei zur elektromotorischen Verschiebung des Vordersitzes (1) in die Einstiegsstellung nicht nur der Sitzlehnenschalter (5) durch Vorklappen der Sitzlehne (8) betätigt sondern auch der Umschalter (6) in der Vorverlegungsstellung V sich befinden muß.

2. Elektrische Verstelleinrichtung nach Anspruch 1,
**dadurch gekennzeichnet, daß** der Sitzlehnenschalter (5) so angeordnet, daß er erst dann betätigt wird, wenn die Sitzlehne (8) bis zur Endlage oder bis kurz davor vorgeklappt ist.

3. Elektrische Verstelleinrichtung nach Anspruch 1,
**dadurch gekennzeichnet,**
**daß** der Umschalter (6) auch eine Rückverlegungsstellung R aufweist, in welche der Umschalter (6) durch Herunterdrücken des Entriegelungshebels (7) über die Neutralstellung N hinaus gebracht werden kann, wobei zur Rückverlegung des Vordersitzes (1) zumindest der Umschalter (6) sich in der Rückverlegungsstellung R befinden muß.

4. Elektrische Verstelleinrichtung nach Anspruch 3,
**dadurch gekennzeichnet,**
**daß** zur Rückverlegung des Vordersitzes (1) zusätzlich die Sitzlehnene (8) in die Gebrauchsstellung zurückgeklappt sein muß.

5. Elektrische Verstelleinrichtung nach einem der vorangehenden Ansprüche,
**dadurch gekennzeichnet,**
**daß** wenn eine Längsverstellung des Vordersitzes (1) durch die Betätigung des Entriegelungshebels (7) angefordert wird, der Verstellmotor (2) so angesteuert wird, daß diese Verstellung mit einer höheren Geschwindigkeit erfolgt, als die normale Komfortverstellung.

6. Elektrische Verstelleinrichtung nach Anspruch 5,
**dadurch gekennzeichnet,**
**daß** die Verstellung mit erhöhter Geschwindigkeit nur dann erfolgt, wenn gleichzeitig ein Türkontaktschalter (9) eine geöffnete Tür anzeigt.

## Claims

1. Electric adjustment device for a front seat (1) of a motor vehicle, with which the front seat can be displaced by an electric motor at least in the longitudinal direction,
- with a control device (3) which by means of a backrest switch (5) which can be actuated by folding the seatback forward can be set into a mode of operation to assist entry wherein the front seat is displaced forward into a entry position,
- wherein an unlocking lever (7) is provided on the seatback (8), by means of which the seatback is mechanically unlocked in unlocking position and its folding forward is facilitated,
**characterised in that** the control device (3) is additionally controlled by a change-over switch (6) with at least one forward moving position V and a neutral position N,
- wherein the changeover switch (6) is coupled to the unlocking lever (7) and can be actuated **in that** in the unlocking position of the unlocking lever (7) the changeover switch (6) is in the forward moving position V,
- wherein for the purpose of the displacement of the front seat (1) by electric motor into the entry position not only the seatback switch (5) must be actuated by folding forward the seatback (8) but also the changeover switch (6) must be in the forward moving position V.

2. Electric adjustment device according to claim 1,
**characterised in that**
the seatback switch (5) is arranged in such a way that it is not actuated until the seatback (8) is folded forward as far as the end position or shortly before this.

3. Electric adjustment device according to claim 1,
**characterised in that**
the changeover switch (6) also has a rearward moving position R, into which the change-over switch (6) can be brought by pushing down the unlocking lever (7) via the neutral position wherein at least the change-over switch (6) must be in the rearward moving position R for the rearward moving of the front seat (1).

4. Electric adjustment device according to claim 3,
**characterised in that**
in addition the seatback (8) must be folded back into the position of use for the rearwward moving of the front seat (1).

5. Electric adjustment device according to one of the preceding claims,
**characterised in that**
if a longitudinal adjustment of the front seat (1) is required through the actuation of the unlocking lever (4) the adjusting motor (2) is controlled in such a way that this adjustment takes place at a higher speed than the normal comfort adjustment.

6. Electric adjustment device according to claim 5,
**characterised in that**
the adjustment only takes place at a higher speed if at the same time a door contact switch (9) indicates an opened door.

## Revendications

1. Dispositif de réglage électrique pour un siège avant (1) d'un véhicule automobile permettant de déplacer le siège avant du moins dans la direction longitudinale à l'aide d'un moteur électrique,
- comprenant un appareil de commande (3) qui peut être commuté en un mode de fonctionnement d'aide à l'accès par un commutateur de dossier de siège (5) actionnable par basculement du dossier de siège vers l'avant, dans lequel mode le siège avant est déplacé vers l'avant dans une position d'accès,
- un levier de déverrouillage (7) étant prévu sur le dossier de siège (8) par lequel le dossier de siège, en position de déverrouillage, est déverrouillé mécaniquement pour permettre son basculement vers l'avant,
**caractérisé en ce que** l'appareil de commande (3) est également commandé par un commutateur (6) avec au moins une position de déplacement vers l'avant V et une position neutre N, dans lequel
- le commutateur (6) est couplé avec le levier de déverrouillage (7) et peut être actionné de telle sorte qu'en position de déverrouillage du levier de déverrouillage (7), le commutateur (6) se trouve dans la position de déplacement vers l'avant,
- pour le déplacement par moteur électrique du siège avant (1) dans la position d'accès, non seulement le commutateur de dossier de siège (5) est actionné par un basculement du dossier de siège (8) vers l'avant, mais le commutateur (6) doit également se trouver dans la position de déplacement vers l'avant V.

2. Dispositif de réglage électrique selon la revendication 1,
**caractérisé en ce que** le commutateur de dossier de siège (5) est disposé pour n'être actionné que lorsque le dossier de siège (8) est basculé vers l'avant jusqu'à la position finale ou peu avant celle-ci.

3. Dispositif de réglage électrique selon la revendication 1,
**caractérisé en ce que** le commutateur (6) présente également une position de déplacement vers l'arrière R dans laquelle le commutateur (6) peut être placé en abaissant le levier de déverrouillage (7) au-delà de la position neutre N, au moins le commutateur (6) devant se trouver dans la position de déplacement vers l'arrière R pour le déplacement vers l'arrière du siège avant (1).

4. Dispositif de réglage électrique selon la revendication 3,
**caractérisé en ce que** pour le déplacement du siège avant (1) vers l'arrière le dossier de siège (8) doit être basculé vers l'arrière dans la position d'utilisation.

5. Dispositif de réglage électrique selon l'une quelconque des revendications précédentes,
**caractérisé en ce que** lorsqu'un réglage longitudinal du siège avant (1) est demandé par l'actionnement du levier de déverrouillage (7), le moteur de réglage (2) est commandé de telle sorte que ce réglage s'effectue à une vitesse plus élevée que le réglage de confort normal.

6. Dispositif de réglage électrique selon la revendication 5,
**caractérisé en ce que** le réglage à une vitesse plus élevée ne s'effectue que si un contacteur de porte (9) indique simultanément une porte ouverte.
